# EUROPEAN PATENT APPLICATION

(11) **EP 3 454 531 A1**
(43) Date of publication of application: **13.03.2019**
(21) Application number: 18193951.3
(22) Date of filing: 12.09.2018
(51) Int. Cl.: H04L 29/12, H04L 29/06, H04L 29/14

(54) **METHOD AND SYSTEM FOR SURVIVING OUTAGES IN HOSTED SIP SERVICE NETWORKS**

(30) Priority: 12.09.2017 US 201715701760
(71) Applicant: Patton Electronics Company, Gaithersburg, MD 20879 (US)
(72) Inventor: Meyer, Thomas, 3027 Bern (CH)
(74) Representative: Ehrner & Delmar Patentbyrå AB

(57) **Abstract**

Provided are methods, devices and systems to augment a hosted SIP-PBX (Private Branch Exchange) installation with survivability features. The SIP survivability agent passively monitors ongoing SIP transactions between a local (enterprise) network and a remote (hosted) SIP service and learns the contact addresses of all parties. When the remote SIP service becomes unreachable, the survivability agent takes over the responsibility of the remote SIP service and connects the SIP sessions locally, allowing station-to-station, emergency, and external breakout calls.

## Description

### Background of the Invention

The Session Initiation Protocol (SIP) (RFC3261) is a signaling protocol for setting up media connections between two or more parties. SIP has been widely adopted for establishing voice calls over IP networks. Following the trend of unifying all media and data traffic over IP networks (ALL-IP strategy), many enterprises have started to migrate their traditional telephony infrastructure to a SIP-based telephony and unified-communication (UC) system.

A more recent trend for enterprises is to out-source their SIP-based Private Branch Exchange (SIP-PBX) into the cloud. VoIP providers have started to offer hosted PBX and UC services where internal and external phone calls are switched in the provider's datacenter. However, the advantage of delegating the operation of an enterprise PBX to a professional service provider comes with a down-side: A hosted service running in a remote datacenter is naturally susceptible to outages of the enterprise's WAN link to the Internet. This leads to the following negative consequences. First, station-to-station calls within the company are no longer possible during a WAN-link outage. Second, and more importantly, emergency E911 calls are not delivered if the WAN-link is down or if the hosted PBX service is unreachable for another reason.

Several survivability solutions have been proposed to mitigate this problem. One approach is to set up a backup WAN link that becomes active if the primary link goes down. This approach provides a redundant path on the network layer (IP). However, such a layer-three redundancy solution is not able to prioritize emergency VoIP calls over data traffic, for example. Since the redundant link often exhibits a lower bandwidth than the primary link it is of utter importance to prioritize important traffic such as emergency calls.

Another, typical solution suggests installing a Session-Border Controller (SBC) at the edge of the enterprise network. The SBC either acts as an application-level gateway (e.g. SIP back-to-back User Agent (B2B-UA)) or as a SIP application proxy. By recognizing SIP signaling flows, an SBC is able to detect that a remote SIP service is no longer reachable and switch the SIP sessions over an alternate route, e.g. over a backup WAN link or via a telephony gateway to the PSTN network. This is a reliable way of granting that emergency calls are still possible. The problem with this approach is that all participating endpoints within the enterprise have to route the SIP sessions over that SBC. That is, SIP phones must be re-configured to connect to the SBC instead of the hosted SIP service or use the SBC as an outbound proxy. Experience showed that many enterprises first deploy a hosted telephony service and take care of redundancy only later, such that potentially thousands of phones must be reconfigured.

What is required by many enterprises is a network function that can be looped in between the enterprise LAN and the Internet access router and observe the SIP traffic between the local SIP endpoints (e.g. phones) and the remote SIP servers in a non-intrusive way, i.e. by not modifying any of the passing SIP messages. The device should automatically learn the addresses of the SIP services as well as the contact addresses of the local endpoints in the LAN. It should continuously probe whether the detected SIP services are reachable or not. Only in the event of an unreachable SIP service should the device interact with the SIP endpoints in order to connect local station-to-station calls (from LAN endpoint to LAN endpoint) and provide an alternative route for emergency and other external calls (e.g. over a PSTN breakout gateway). The device should also observe DNS packets to populate an internal DNS cache. The DNS cache answers service name-resolution requests if the public DNS servers are not reachable.

### Summary of the Invention

Embodiments of the present invention allow a method and system to redirect SIP sessions over an alternative path in case of an outage of the primary path without the need to re-configure the participating SIP endpoints. In one embodiment, the method comprises:
- receiving a duplicate of all SIP and/or DNS packets exchanged between two networks,
- forwarding the received DNS packets to a DNS cache,
- parsing the received SIP packets,
- learning the set of all SIP services in the network from the received REGISTER requests and storing a corresponding entry for each SIP service in a database,
- continuously observing the reachability of all SIP services thus learned and updating the reachability state of the services in the aforementioned database,
- forwarding the received REGISTER requests to a local fallback SIP server, the address of which has to be configured by the network administrator,
- learning, on that fallback SIP server, the set of all SIP clients (e.g. phones) in the network from the received REGISTER requests and storing an entry for each client a database, and
- if receiving a SIP request (e.g. INVITE) for a service that has been marked unreachable in the database, sending a redirect response back to the client with the purpose of redirecting the session to the aforementioned local fallback SIP server. The fallback SIP server may handle local endpoint-to-endpoint calls or place external calls to a gateway.

Embodiments of the invention may also provide a system for providing service survivability, the system comprising: a DNS cache storing received DNS responses; a database storing a SIP service name, an address and availability for an associated service; a fallback server; a packet handler in communication with the database, the packet handler: monitoring messages between a local device and a remote service; determining when the message is a register request for a service; determining if the service is in the database; creating an entry in the database for the service when the service is not in the database; determining the availability associated with the service from the database; forwarding a copy of the register request to the fallback server when the availability indicates the service is reachable; and storing the request when the availability indicates that the service is not available; and wherein the fallback server determines the address of the local device from the forwarded register request and stores the address.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### Brief Description of the Drawings

**FIG. 1** illustrates an exemplary system according to an embodiment of the invention;
**FIG. 2** illustrates an exemplary system according to an embodiment of the invention;
**FIG. 3** illustrates an exemplary system according to an embodiment of the invention;
**FIG. 4** illustrates an exemplary system according to an embodiment of the invention;
**FIG. 5** illustrates an exemplary database system;
**FIG. 6** illustrates an exemplary message flow according to an embodiment of the invention;
**FIG. 7** illustrates an exemplary message flow according to an embodiment of the invention.

### Detailed Description

Various configurations and embodiments of the disclosure are described in detail below. While specific implementations are described, it should be understood that this is done for illustration purposes only. Other components and configurations may be used without parting from the spirit and scope of the disclosure. For example, the term "database" does not imply using a relational database. The data may also be stored in RAM and structured in any way suitable for the problem. Also, the partition and mapping of functionality to physical devices may be different than suggested in the drawings; any combination of modules can be mapped to a physical device or even run as software in a virtualized computing environment. Furthermore, the term "Internet" suggests that the Internet Protocol is used. Other protocols may also be used to exchange information between entities of the described system.

Embodiments of the present invention provide a system and method for SIP service continuity in the event of a network separation between the SIP endpoints (e.g. phones) and the SIP services. This is a typical problem but not limited to hosted SIP-PBX scenarios, where the SIP endpoints are connected to the enterprise LAN whereas the SIP service runs in a remote datacenter reachable over the public Internet. Service continuity is achieved by learning the network addresses of the SIP endpoints and services and by redirecting SIP sessions to a local fallback server in case the public SIP service is unreachable.

Learning the addresses of the participating endpoints and services is done in a passive way, by observing the SIP message flow without modifying any network packet. Those skilled in the art will recognize that this is a fundamental novelty. So far, in order to be able to route a SIP session over an alternative path, a SIP proxy or B2B-UA must be inserted into the SIP routing path. This often came with the burden of re-configuring all SIP endpoints to route sessions over the inserted device.

Note that there may be a distinction between a 'SIP service' and a 'SIP server'. Here, the term 'SIP server' may be a physical or virtual machine running the SIP protocol. A SIP server typically is addressed by a unique IP address or hostname. A 'SIP service' on the other hand may be offered at a Fully-Qualified Domain Name (FQDN), typically resolved with a DNS service record. Requests to a SIP service may be distributed to multiple servers for redundancy and load-balancing reasons. Embodiments of the invention may either observe the reachability of the SIP servers (destination IP addresses of SIP request) or of SIP services (Request-URI of the SIP requests). The latter method provides advantages because the reachability of the entire service is observed: If one server is down, the service may still be offered by redundant servers. However, using FQDN URLs requires a working domain-name service. Name servers are most likely not reachable in the case of a network separation. Therefore, in such scenarios embodiments of the invention may provide a DNS cache that resolves the SIP service FQDNs to IP addresses.

In one embodiment of the invention all the above functionality may be embedded into a device called a Survivability Agent. This agent receives a duplicate of all packets exchanged between two networks, typically between the enterprise LAN and the Internet. The easiest way of sending packet duplicates to the Survivability Agent is to connect it to the mirroring or tap port of an Ethernet switch. Other embodiments of the invention may integrate the switch into the Survivability Agent and mirror the packets internally.

The Survivability Agent passively receives all SIP messages exchanged between the SIP endpoints and the SIP services without modifying the packets. This is in contrast to survivability agents that are implemented as SIP B2B-UAs or SIP proxies that alter some of the protocol headers of layer 3 (IP) and upwards (SIP), which typically requires a reconfiguration of all SIP endpoints.

The Survivability Agent stores in a local database the set of all SIP services to which the endpoints communicate. This is done by parsing the SIP REGISTER requests and storing the Request-URI as service address. A "local" database may be located in the path prior to an internet access device. The Survivability Agent also forwards the SIP REGISTER request to a local Fallback SIP Server, which stores the address of all SIP endpoints that have successfully registered and authenticated to a SIP service. Hence, since the endpoints continuously re-register with the service, the system is able to eventually learn the Fully-Qualified Domain Names (FQDN) of all endpoints and all services.

The Survivability Agent observes whether the SIP services are reachable or not by sending OPTIONS requests or similar pings in a regular interval to all SIP services in its database. If a service does not respond within the interval, the state of the SIP service is marked as 'unreachable' in the corresponding database entry. Otherwise, if the service responds within the interval, the state of the SIP service is marked as 'reachable'. More elaborate methods may also be used to detect the reachability status of a SIP service, as discussed later.

The Survivability Agent sends a copy of all observed SIP REGISTER request to a local SIP server with the purpose of maintaining a shadow copy of the registration database in the local network. The response messages from the local SIP server are silently discarded.

As mentioned earlier, the Survivability Agent maintains for each SIP service an entry in the local database to track the service's reachability state (reachable, unreachable, unknown). When the Survivability Agent observes a SIP request for one of the SIP services stored in the local database it does not interact as long as the service status is marked as 'reachable'. However, if the Survivability Agent detects a SIP request while the corresponding service status is marked as 'unreachable' it assumes that this request will never reach the service and, on behalf of the service, sends a '302 Temporarily Moved' response back to the originating SIP endpoint. That SIP endpoint will then re-send the request to the local fallback SIP server (for example, according to RFC3261), which is able to handle station-to-station calls within the local network. Optionally, the local fallback SIP server may send phone calls to external numbers via a SIP gateway to the PSTN network, or as SIP calls over a redundant IP link.

Note that the Survivability Agent passively listens to the SIP flows and only intervenes by sending redirect responses in case the corresponding SIP service is down. One advantage over traditional methods is that SIP endpoints do not have to be re-configured neither with a looped in proxy or B2B UA nor with a second registrar. Another advantage is that the system automatically learns about the connected SIP endpoints and services.

The Survivability Agent may also cache DNS responses for domain names that are resolved by name servers in the Internet on behalf of client devices in the enterprise LAN. This may be achieved by observing DNS queries and responses that are being exchanged between the two networks and by storing those responses in a local database. The use of such a cache for DNS responses may allow the SIP endpoints to resolve domain names in case the Internet is separated from the enterprise LAN.

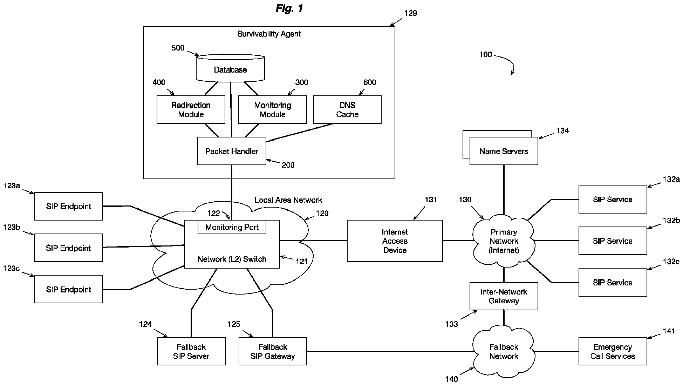

**FIG. 1** shows a typical network topology of a hosted SIP service **100**. Several SIP Endpoints or User Agents (UA) **123** may resolve the address of a SIP service by exchanging DNS packets with a name server **134** and register to a remote SIP service that may be replicated or load-balanced across multiple physical or virtual server machines **132**. A recent trend in enterprise communication is to use a hosted SIP service, which means that the SIP service **132** is not operated by the same IT administrator and/or company that operates and uses the client SIP endpoints **123**. Typically, the SIP Endpoints **123** are connected to the company LAN **120**, which is often realized by one or more interconnected Ethernet switches **121**. For the sake of simplicity, **FIG. 1** only shows one switch. The LAN **120** typically is isolated from the public Internet **130** by a sequence of network functions such as a firewall, Network-Address Translation (NAT), and layer-3 routing. In this drawing, these network functions all are offered by an Internet Access Device (IAD) **131**. The SIP services **132** typically are not co-located in the company LAN but rather provided as a multi-tenant service in the service provider's data center, which is connected to the public Internet **130**.

The SIP Survivability Agent **129** may be split into three logical functions. First, the Packet Handler Module **200** observes the DNS and SIP traffic that travels from the LAN to the Internet and vice-versa, passes the DNS requests and responses to a DNS cache **600**, parses the SIP messages, learns the URIs of all SIP services **132**, and stores the corresponding SIP service entries to the local database **500**. Second, for each entry in the database **500** the Monitoring Module **300** learns about the reachability status of the SIP services **132** by continuously sending OPTIONS pings or using a similar method. Finally, the Redirection Module **400** redirects SIP requests from local endpoints **123** to a local Fallback SIP Server **124** if the destined remote service **132** is unreachable. The Redirection Module **400** reads the reachability status from the local database **500**.

The Fallback SIP Server **124** is connected to the LAN **120** as well and maintains a shadow copy of all SIP endpoint registrations. Note that the SIP endpoints **123** in some embodiments don't register directly with the Fallback SIP server **124.** Instead, the Survivability Agent **129** sends a copy of the received REGISTER requests to the Fallback SIP Server **124** on behalf of the SIP endpoints **123**.

By knowing the contact address of all local SIP endpoints **123**, the Fallback SIP Server **124** is able to route local station-to-station calls if a remote SIP service **132** is not reachable anymore. For this purpose, the Redirect Module **400** of the Survivability Agent **129** sends a '302 Temporarily Moved' response back to a SIP endpoint **123** that originally sent a request to an unreachable SIP service **132**. This redirect response tells the SIP endpoint **123** to contact the Fallback SIP server instead of the original SIP service.

The Fallback SIP Server **124** may be configured to forward some requests to a Fallback SIP Gateway **125**. This gateway connects to a Fallback Network **140** such as the Plain Old Telephony-System (POTS), an Integrated Services Digital Network (ISDN), or a separate wired or wireless WAN link connected to the Internet. This allows emergency calls **141** and other remote calls to be placed even if the access to the Primary Network **130** is down or if the SIP service **132** is unreachable for another reason.

The network topology may vary from the one depicted in **FIG. 1**. For example, embodiments of the invention may use a mirroring port **122** of the LAN switch **121** to obtain a copy of all packets that enter/exit the switch port towards the IAD **131**. Other embodiments integrate the Ethernet switch **121** into the Survivability Agent **129** such that the Survivability Agent **129** is looped in between the LAN **120** and the IAD **131**. Also, the Fallback SIP Server **124** and/or the Fallback SIP Gateway **125** may be integrated into the Survivability Agent **129**. Such an integration simplifies the deployment of the system into existing company networks.

### Operation Principle of the Packet Handler

The Packet Handler module **200** may be part of the Survivability Agent **129**. It is responsible for
- parsing the mirrored SIP packets,
- creating entries for all SIP services learned from observed REGISTER requests,
- sending REGISTER requests to the local Fallback SIP Gateway **125**, and
- forwarding SIP requests for unreachable SIP services to the Redirection Module **400**.

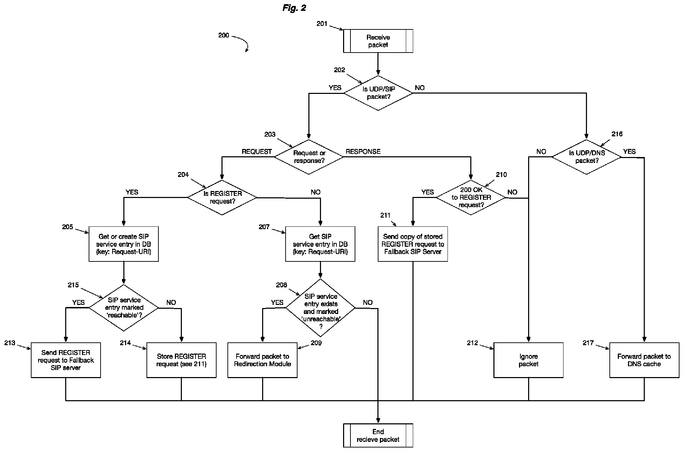

**FIG. 2** shows the flow of observed packets through the Packet Handler module **200**.

Since the Packet Handler **200** is connected to the mirroring port **122** of a switch **121**, it potentially receives **201** all packets to/from the Internet. Embodiments of the invention may optimize the performance of the system by configuring rules for the Network Switch **121** as to only forward UDP packets to port 5060 (or other ports on which the SIP services **132** listen for SIP packets) to the Survivability Agent **129**. This results in a lower packet rate entering the Packet Handler **200** and enables running the Survivability Agent **129** on less expensive hardware.

The Packet Handler **200** discriminates all packets received. It ignores **212** non-SIP **202** / non-DNS **216** packets and most SIP responses **203** (except '200 OK' to REGSITER requests). One typical way to determine whether a message is a SIP or DNS packet, is to check whether it is a UDP packet sent to destination port 5060 or port 53, respectively. Most commercial SIP deployments run their SIP services on this default port. The Packet Handler **200** can be improved by allowing the system administrator to configure the UDP ports that are used for SIP and DNS traffic. DNS packets are forwarded **217** to the DNS cache, a standard network function that is not explained further.

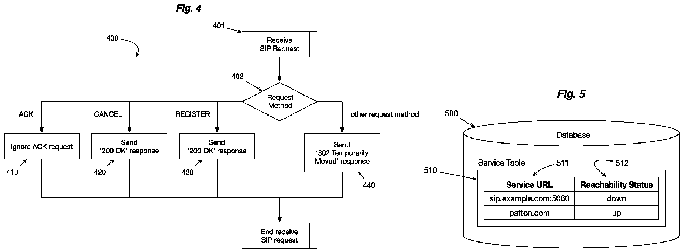

The next step is to discriminate REGISTER from non-REGISTER requests **204**. For each register request received, the Packet Handler **200** checks whether a corresponding entry in the database **500** exists **205**. If not, it creates a new entry. An entry in the Service Table **510** consists of the Service URL **511**, taken from the Request-URI of the REGISTER request and the Reachability Status **512**, which is 'unknown' initially (see **FIG. 5** for the database structure). The Reachability Status **512** will eventually be set to 'reachable' or 'unreachable' by the Monitoring Module **300**.

If the Reachability Status 512 is 'unreachable' **215**, for each received REGISTER request, the Packet Handler **200** temporarily stores a copy of the REGISTER request **214**. This copy is later sent **211** to the Fallback SIP Server **124** when receiving a '200 OK' response. This allows the Fallback SIP Server **124** to learn the contact addresses of the registered SIP Endpoints **123**. We defer updating the Fallback SIP Server **124** between **214** and **211** because observing the '200 OK' response from the remote SIP Service **132** indicates that the SIP service authenticated the user and authorized him/her to register.

However, if the Reachability Status **512** is 'reachable' when receiving a REGISTER request, the Packet Handler **200** immediately sends **213** a copy of that REGISTER request to the Fallback SIP Server **124**, because there will be no response from the SIP Service **132**.

If the received packet is a non-REGISTER request **204**, the Packet Handler **200** queries for the corresponding service entry in the database **500** by matching the Request-URI of the packet to the Service URL field **511** in the Service Table **510**. If such an entry exists and if the value of the Reachability Status field **512** is 'unreachable', the Packet Handler **200** forwards **209** the non-register REQUEST to the Redirection Module **400**, which is described in detail below. Otherwise, if the service is unknown or if its reachability status is 'reachable' or 'unknown', the request is silently discarded.

### Operation Principle of the Monitoring Module

The Monitoring Module **300** may be another part of the Survivability Agent **129**. It may continuously track the reachability status of all SIP services recorded in the local database **500** and update the Reachability Status **512** to either 'reachable' or 'unreachable' (see **FIG. 5**).

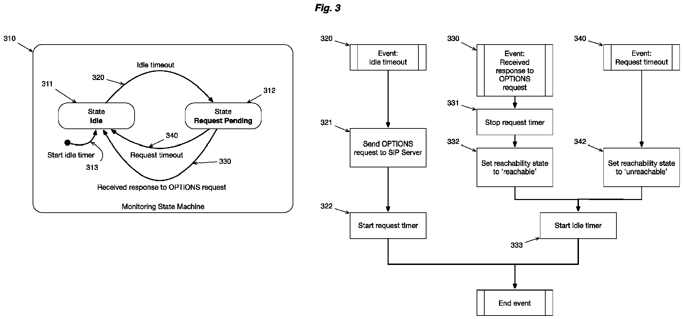

**FIG. 3** shows how embodiments of the invention may implement this functionality as a finite state machine. For each entry in the Service Table **510**, there exists one instance of the Monitoring State Machine **310**, comprising two states Idle **311** and Request Pending **312**. When a new entry is added to the Service Table **510**, this state machine is initialized to the Idle state **311** and the idle timer is started **313**. The duration of the idle timer defines the interval at which the Monitoring Module sends OPTIONS requests to the SIP service to check its reachability. The shorter this interval, the sooner the system recognizes that a SIP Service **132** is down but the more network traffic and server load is generated by the Survivability Agent **129**. The duration of the idle timer should be configurable.

The only event that eventually occurs in the Idle state **311** is a timeout of the idle timer **320**. In this case, the state machine sends **321** an OPTIONS request according to RFC3261 to the corresponding SIP service, starts the request timer **322**, and changes to the Request Pending state **312**. The Request-URI of the OPTIONS request is taken from the corresponding Service URL field **511** in the Service Table **510**. Since this table contains one entry per SIP service, we check the reachability of the entire service for multiple registering users at once.

The SIP stack in use may already re-transmits the OPTIONS request several times until Timer D elapses (see RFC 3261, Appendix A). If it is required to switch to fallback mode earlier than within the idle timeout plus the 32 seconds of Timer D, embodiments of the invention may reduce the duration of Timer D.

In the Request Pending state **312**, two events may occur. If the state machine receives a response to the OPTIONS request **330**, it stops the request timer **331** and sets the value of the Reachability State field **512** in the Service Table **510** of the corresponding entry to 'reachable' **332**. If the request timeout elapses before receiving a response to the OPTIONS request **340**, the state machine sets the value of the same field to 'unreachable' **342**. In both cases, the state machine re-starts the idle timer **333** and changes back to the Idle state **311**.

Instead of sending OPTIONS requests, the state machine may use other methods to determine the reachability of the SIP service. For example, it may use ICMP Echo Requests according to RFC792. Another method is to listen to responses returning from the SIP service. If a SIP service responds to a request from a SIP Endpoint, that service is reachable. In this case, the Monitoring Module **300** may defer sending an OPTIONS request until there is no SIP response observed within the idle timer interval.

### Operation Principle of the Redirection Module

The Redirection Module **400** also may be part of the Survivability Agent **129**. It receives SIP requests observed between the SIP Endpoints **123** and the remote SIP Services **132** only if the Packet Handler **200** determined that the target service is not reachable (marked as 'unreachable' in the local database **500**.) The Redirection Module 400 redirects this message to the local Fallback SIP Server **124**.

**FIG. 4** shows the basic operation principle of the Redirection Module **400**. For each SIP request, received **401** from the Packet Handler **200**, the Redirection Module **400** determines the SIP request method and acts differently for the following methods **402**.

ACK messages are ignored **410**: An ACK message finishes the three-way handshake to establish a SIP dialog. If the SIP Service **132** becomes unreachable within such a handshake there is no possibility for the Survivability Agent **129** to intervene at this last message exchanged. Optionally, embodiments of the invention may send a BYE message to the SIP Endpoint **123** in this case. Otherwise, the user will soon terminate the call and re-try if he/she detects that the media stream is broken.

The Redirection Module **400** responds with a '200 OK' message to CANCEL requests **420**. A CANCEL message is used to terminate a started dialog. This scenario occurs if the SIP Service **132** became unreachable while the SIP Endpoint **123** tried to establish a dialog but then decided to stop the dialog.

The Redirection Module **400** also responds with a '200 OK' message to REGISTER requests **430**. SIP Endpoints **123** typically try to re-register periodically to the SIP Service **132**. Because the SIP Endpoints should believe that the service is still available even though the remote SIP service is unreachable, registration requests may be positively acknowledged.

The Redirection Module **400** attaches an Expires header to responses to REGISTER requests. The returned expiration time is chosen to be very short, e.g. 20s, to force the SIP Endpoints **123** to try to re-register more frequently, e.g. every 10s (half the expiration time). This is desirable because the SIP Service **132** may lose information about the registered endpoints during a service outage. Such a loss of registration information may happen either because the SIP Service **132** had to be restarted or because the service interruption was longer than the negotiated expiration interval, in which case the SIP Service **132** drops the address of the SIP Endpoints **123**. In both cases the SIP Endpoints **123** should re-register soon after the SIP Service is reachable again. The additional traffic in the LAN **120** is tolerable during the outage of the remote service.

Finally, if the Redirection Module **400** receives a SIP request method other than ACK, CANCEL, or REGISTER, it responds with a '302 Temporarily Moved' message **440**. It attaches the address of the Fallback SIP Server **124** to the Contact header of this response. This instructs the SIP Endpoint **123** to contact the local server instead but to ask the original SIP Service **132** again next time. The local Fallback SIP Server **124** already knows the addresses of all registered SIP Endpoints **123** (see description of the Packet Handler 200) and is able to handle local station-to-station calls and forward emergency and other external calls to the Fallback SIP Gateway **125**.

One benefit of embodiments of the invention described in this disclosure is that the SIP endpoints **123** neither require knowledge of the Survivability Agent **129** nor of the Fallback SIP Server **124** or the Fallback SIP Gateway **125**. The Survivability Agent **129** passively monitors the SIP messages exchanged between the SIP Endpoints **123** and the remote SIP Services **132** without modifying the packets and only intervenes (i.e. sends redirect responses) in the event of a SIP service outage.

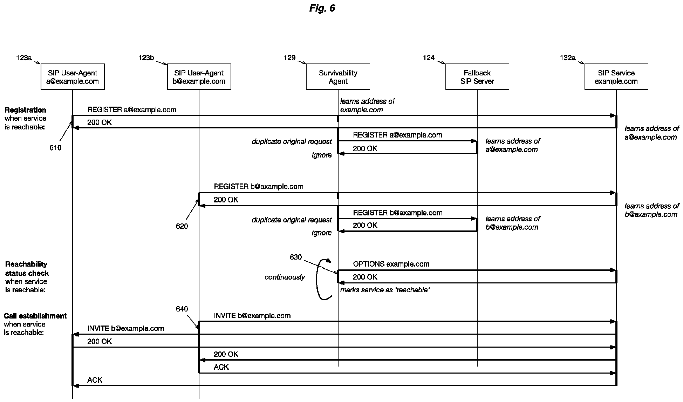

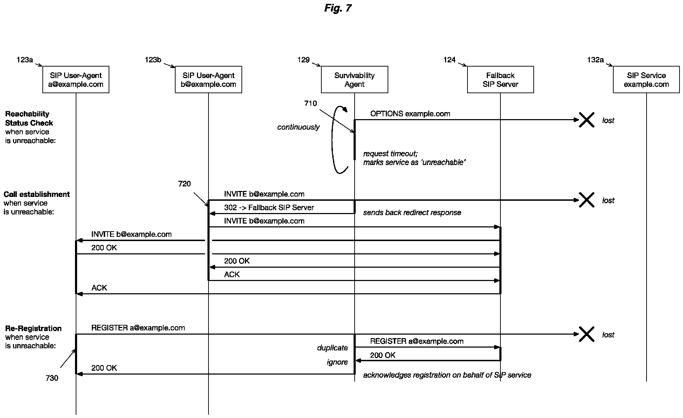

To clarify the operation principle of the Survivability Agent **129**, **FIG. 6** and **FIG. 7** depict typical message flows in the context of the entire system/network **100**.

**FIG. 6** shows a registration and a typical station-to-station **123** call-establishment scenario for the case where the SIP Service **132** is reachable. First, two SIP Endpoints **123a** and **123b** register (**610** and **620**, resp.) with a SIP Service **132a**. The Survivability Agent **129** observes those messages and learns the URI of the SIP Service **132a**: example.com. When the Survivability Agent **129** observes the positive acknowledgment of the registration request (i.e. the '200 OK' response), it duplicates the original REGISTER request and sends it to the Fallback SIP Server **124**. Note that neither the SIP endpoints nor the SIP services neither receive a modified nor an additional message from the Survivability Agent **129**. That is, the actions of the Survivability Agent **129** are completely transparent to them.

The Survivability Agent **129** then starts to periodically send an OPTIONS request to the learned SIP Service address **630**. As long as those OPTIONS requests are answered, the Survivability Agent **129** marks the reachability state of that service as 'reachable' in its database.

When SIP endpoint **123b** establishes a call **640** to another SIP Endpoint **123a**, the Survivability Agent does not intervene as long as the corresponding SIP Service is reachable. The call is handled by the SIP Service **132a** as if the Survivability Agent would not exist.

**FIG.7** shows a re-registration and the same station-to-station **123** call-establishment scenario for the case where the SIP Service **132** is unreachable. If the OPTIONS requests sent **710** by the Survivability Agent **129** are not answered anymore by the SIP Service **132a**, the Survivability Agent **129** marks the reachability state of that service as 'unreachable' in its database.

When SIP Endpoint **123b** now establishes a call **720** to another SIP Endpoint **123a**, the Survivability Agent **129** sends back a '302 Temporarily Moved' response to the originating SIP Endpoint **123b**, redirecting the call to the Fallback SIP Server **124**. That SIP Endpoint **123b** then sends the INVITE a second time to the Fallback SIP Server **124**, which is able to connect the call to the destination SIP Endpoint **123a**, because it earlier received a copy of that endpoint's REGISTRATION request (see **FIG. 6**). Note that the behavior of SIP Endpoint **123b** upon receiving a **302** response may be according to RFC3261.

SIP Endpoints **123** may re-register while the SIP Service **132** is unreachable. In this case **730**, the Survivability Agent **129** immediately responds with a '200 OK' message after it duplicated the REGISTER message and sent it to the Fallback SIP Server **124**.

Note that the behavior of all devices in network **100** strictly follow the SIP standard except the Survivability Agent **129**, which does not violate the standard but provides functionality that goes beyond the features describe in the corresponding RFCs.

It should be understood, of course, that the foregoing relates to exemplary embodiments of the invention and that modifications may be made without departing from the spirit and scope of the invention as set forth in the following claims.

## Claims

1. A system for providing service survivability, the system comprising:
a database storing a service name, an address and availability for an associated service;
a fallback server;
a service name-resolution cache;
a packet handler in communication with the database, the packet handler:
monitoring messages between a local device and a remote service;
determining when the message is a name-resolution packet;
forwarding a copy of each name-resolution packet to the service name-resolution cache;
determining when the message is a register request for a service;
determining if the service is in the database;
creating an entry in the database for the service when the service is not in the database;
determining the availability associated with the service from the database;
forwarding a copy of the register request to the fallback server when the availability indicates the service is reachable; and
storing the request when the availability indicates that the service is not available; and
wherein the fallback server determines the address of the local device from the forwarded register request and stores the address.

2. The system of claim 1, further comprising:
determining the availability of the service from the database when the message is not a register request; and
sending the message to the redirection module when the availability is indicated as not reachable.

3. The system of claim 2, further comprising:
a monitoring module in communication with the packet handler and the database and configured to:
send a monitoring message to the service;
updating the database to indicate the service is available when a response to the monitoring module is received within a predetermined time; and
updating the database to indicate the service is not available when no response the monitoring message is received within the predetermined time.

4. The system of claim 1, wherein the redirection module sends the request to the fallback server when the status for the service indicates that the service is not reachable.

5. The system of claim 1, wherein the redirection module determines if the message is one of an acknowledgment, cancel, or register message and sending a service moved message when not.

6. The system of claim 1, wherein the redirection module:
takes no action in response to an acknowledgement message;
sends an ok message to the local device when the message is the cancel message; and
sends with an ok message to the local device, the ok message including an expiration time when the message is a register message.

7. The system of claim 1, further comprising passively monitoring the message between a multitude of networks.

8. The system of claim 1, wherein the packet handler communicates with a mirror port of a network switch to receive a copy of the messages.

9. The system of claim 1, wherein the network switch is configured to forward messages to the packet handler according to predetermined rules.

10. The system of claim 1, wherein the rule specify that only SIP messages are to be forwarded to the packet handler.

11. The system of claim 1, wherein the rules specify that only message directed to a particular set of ports are forwarded to the packet handler.

12. The system of claim 1, wherein the rules specify that only name-resolution messages are to be forwarded to the service name-resolution cache.

13. The system of claim 1, wherein the rules specify that only messages directed to a particular set of ports are forwarded to the service name-resolution cache.

14. The system of claim 1, wherein the database is local with the packet handler.

15. The system of claim 1, wherein the packet handler does not modify the message.

16. A method comprising:
monitoring messages between first and second devices to determine a type for the message;
checking a database for an entry for a requested service when the type is a request;
registering the requested service in the database if the service is not in the database;
determining a status of the service when the service is in the database;
sending a copy of the request to a backup database when the service is available; and
storing the request in the backup database when the service is not available.

17. The method of claim 16, wherein registering the requested service includes determining an address of the first device and the second device, and the availability of the second device from the monitored messages.

18. The method of claim 16, wherein the database includes a record storing the address for the service and the availability of the service.

19. The method of claim 16, further comprising:
sending a message to the first device that that service is not available when the status indicates that the service is not available.

20. A method, comprising:
monitoring messages between a local device and a remote service to identify requests for the service;
determining an address of the requesting device and the service from the messages;
determining if the service is available;
forwarding message identified as requests to a backup server when the service is available;
connecting the requesting device to a local service when the requested service is not available.

21. The method of claim 20, further comprising storing the addresses and status for the service in a database.
